# EUROPÄISCHE PATENTSCHRIFT

(11) **EP 3 317 029 B1**
(45) Veröffentlichungstag und Bekanntmachung des Hinweises auf die Patenterteilung: **30.08.2023**
(21) Anmeldenummer: 16734305.2
(22) Anmeldetag: 29.06.2016
(51) Int. Cl.: B07B 1/54, B08B 7/02

(54) **VERFAHREN UND VORRICHTUNG ZUR KLASSIERUNG VON SUPERABSORBERPARTIKELN**
METHOD AND DEVICE FOR CLASSIFYING SUPERABSORBENT PARTICLES
PROCÉDÉ ET DISPOSITIF POUR LA CLASSIFICATION DE PARTICULES DE SUPERABSORBANT

(30) Priorität: 01.07.2015 EP 15174750
(43) Veröffentlichungstag der Anmeldung: 09.05.2018
(73) Patentinhaber: BASF SE, 67056 Ludwigshafen am Rhein (DE)
(72) Erfinder: STEPHAN, Oskar, 68766 Hockenheim (DE); VOLL, Norbert Eugen, 67551 Worms (DE); FUNK, Ruediger, 65527 Niedernhausen (DE)
(86) Internationale Anmeldenummer: PCT/EP2016/065176
(87) Internationale Veröffentlichungsnummer: WO 2017/001500

(56) Entgegenhaltungen:
- EP-A1- 0 992 293
- EP-A1- 2 548 910

## Beschreibung

Die Erfindung geht aus von einem Verfahren zur Klassierung von Superabsorberpartikeln, bei dem die Superabsorberpartikel auf ein oberstes Siebdeck einer mindestens zwei Siebdecks mit unterschiedlicher Lochgröße aufweisenden Siebmaschine gegeben wird, wobei jeweils die Superabsorberpartikel, die kleiner als die Löcher des jeweiligen Siebdecks sind, durch die Löcher fallen und die auf dem Siebdeck verbleibenden Superabsorberpartikel über eine Entnahmestelle entnommen werden.

Siebmaschinen werden eingesetzt, um Partikel in unterschiedliche Größenklassen zu klassieren. Hierzu weisen Siebmaschinen üblicherweise einen Siebaufbau mit mehreren Siebdecks mit unterschiedlichen Lochgrößen auf, die übereinander angeordnet sind. Die Lochgröße der übereinander positionierten Siebdecks nimmt dabei von oben nach unten ab, so dass immer die Superabsorberpartikel, die kleiner als die Löcher des Siebdecks sind, auf das darunterliegende Siebdeck fallen. Unter dem untersten Siebdeck befindet sich eine Auslaufwanne, in die die kleinsten Partikel fallen. Von den einzelnen Siebdecks und aus der Auslaufwanne werden dann die darauf verbliebenen Partikel entnommen. Zur Unterstützung des Siebprozesses ist die Siebmaschine auf bewegliche Füße gestellt, die mit Hilfe eines Antriebs in Bewegung versetzt werden, so die einzelnen Siebdecks durch die Bewegung der Füße in Schwingung versetzt werden und die auf dem Siebdeck liegenden Partikel in Bewegung kommen.

Bei der Herstellung von Superabsorbern entstehen Partikel in unterschiedlichen Größen, die anschließend in einzelne Größenklassen sortiert werden müssen. Hierzu werden bereits derzeit Siebmaschinen eingesetzt. Nachteil ist jedoch, dass Superabsorberpartikel an den einzelnen Siebdecks anhaften können. Auch besteht die Gefahr, dass Superabsorberpartikel, deren Grö-ße im Wesentlichen der Größe der Öffnungen in einem Siebdeck entspricht, verkanten und hängen bleiben können. Hierdurch ist es erforderlich, den Prozess regelmäßig zu stoppen und die einzelnen Siebdecks zu reinigen. Derartige Stillstandszeiten sind jedoch unerwünscht, da hier durch die Effizienz der Klassierung und damit die Ausbeute sinkt.

Bei üblicherweise eingesetzten Siebmaschinen werden Bälle zur Reinigung der Siebdecks eingesetzt. Die Bälle haben dabei ein geringes Gewicht, das heißt eine niedrige Dichte und eine hohe Rückprallelastizität, um die Abreinigung der Siebdecks zu gewährleisten. Diese Bälle sind jedoch bei der Klassierung von Superabsorberpartikeln nicht verwendbar, da diese einen hohen Verschleiß haben und das Verschleißmaterial in unerwünschter Weise das Produkt verunreinigt. Aufgrund des hohen Verschleißes werden derzeit daher keine Bälle zum Abreinigen von Siebdecks bei der Klassierung von Superabsorberpartikeln eingesetzt.

Aufgabe der vorliegenden Erfindung ist es daher, ein Verfahren zur Klassierung von Superabsorberpartikeln bereitzustellen, mit dem längere Betriebszeiten möglich sind und bei dem die Stillstandszeiten zur notwendigen Reinigung minimiert werden können.

Gelöst wird die Aufgabe durch ein Verfahren zur Klassierung von Superabsorberpartikeln, bei dem die Superabsorberpartikel auf ein oberstes Siebdeck einer mindestens zwei Siebdecks mit unterschiedlicher Lochgröße aufweisenden Siebmaschine gegeben werden, wobei jeweils die Superabsorberpartikel, die kleiner als die Löcher des jeweiligen Siebdecks sind, durch die Löcher fallen und die auf dem Siebdeck verbleibenden Superabsorberpartikel über eine Entnahmestelle entnommen werden, wobei unter jedem Siebdeck Bälle positioniert sind, die durch die Bewegung der Siebmaschine aufspringen und von unten gegen das jeweils darüber liegende Siebdeck schlagen, wobei die Bälle einen Durchmesser im Bereich von 20 bis 60 mm, eine dynamische Steifigkeit bei 1 Hz im Bereich von 40 bis 100 N/mm und eine Dämpfung im Bereich von 1 bis 4 % aufweisen, wobei zur Bestimmung der Steifigkeit und der Dämpfung die Bälle einzeln zwischen zwei Platten mit einer Frequenz von 1 Hz mit einer Druckverformung zwischen -0.5 und -1,5 mm belastet werden und ein Kraft-Weg-Diagramm aufgenommen wird, wobei sich eine Hystereseschleife ergibt, und die Steifigkeit die Steigung der Kraft-Weg-Kurve und die Dämpfung das Verhältnis der Fläche innerhalb der Hystereseschleife bezogen auf die durch maximalen Weg und maximale Kraft definierte Rechteckfläche ist.

Um eine Klassierung in mehr als zwei Fraktionen zu ermöglichen, weist die Siebmaschine mindestens 2 Siebdecks mit unterschiedlicher Lochgröße auf. Hierbei nimmt die Lochgröße von oben nach unten ab, so dass die Superabsorberpartikel, die größer als die Löcher im Siebdeck sind, darauf verbleiben und die kleineren Superabsorberpartikel auf das darunter liegende Siebdeck fallen.

Durch die Bewegung der Bälle derart, dass diese von unten gegen das jeweils darüber liegende Siebdeck schlagen wird am Siebdeck anhaftendes Absorbermaterial gelöst und das Siebdeck auf diese Weise frei von Ablagerungen gehalten. Hierbei ist es notwendig, das Material der Bälle so zu wählen, dass diese nicht von den zu klassierenden Superabsorberpartikeln abrasiert werden und auf diese Weise Verunreinigungen durch das Material der Bälle, das von den Superabsorberpartikeln abgetragen wurde, eingebracht werden. Zudem hat dies den weiteren Nachteil, dass die Bälle immer kleiner werden und dadurch deren Wirkung nachlässt.

In einer Ausführungsform der Erfindung werden die Bälle immer auf dem Siebdeck unterhalb des zu reinigenden Siebdecks positioniert, so dass diese zwischen zwei Siebdecks auf und ab springen. Um auch das unterste Siebdeck zu reinigen, ist es in diesem Fall möglich, Bälle in der Auslaufwanne zu positionieren, so dass diese zwischen der Auslaufwanne und dem untersten Siebdeck auf und ab springen.

Um die mechanische Belastung der Siebdecks zu reduzieren werden in einer bevorzugten Ausführungsform Lochplatten jeweils unterhalb der Siebdecks eingebracht, wobei die Bälle jeweils auf den Lochplatten positioniert werden, so dass diese bei Bewegung der Siebmaschine zwischen der Lochplatte und dem darüber liegenden Sieb auf und ab springen.

Die Verwendung von Bällen zur Reinigung der Siebdecks fand bislang keinen Einsatz, da die Superabsorberpartikel eine raue und kantige Oberfläche aufweisen und damit sehr abrasiv wirken. Durch das Einbringen einer Lochplatte unter jedem Siebdeck, auf der die Bälle aufliegen, so dass diese zwischen jeweils einer Lochplatte und einem Siebdeck aufspringen, hat sich überraschenderweise gezeigt, dass die Bälle nicht oder nur minimal geschädigt werden.

Als Siebmaschine kann jede beliebige, dem Fachmann bekannte Siebmaschine eingesetzt werden, bei der die Siebdecks so in Bewegung versetzt werden, dass die Bälle aufspringen und von unten gegen das darüber liegende Siebdeck schlagen. Derartige Siebmaschinen sind zum Beispiel Vibrationssiebmaschinen oder Taumelsiebmaschinen.

Die Löcher in den einzelnen Siebdecks können auf jede dem Fachmann bekannte Weise gebildet werden. So ist es zum Beispiel möglich, in eine Platte einzelne Löcher einzubringen. Bevorzugt ist es jedoch, wie für Siebe üblich, ein Drahtgewebe einzusetzen, wobei der Durchmesser der Drähte an die Feinheit des Siebes angepasst ist und die Löcher durch den Abstand der einzelnen Drähte zueinander gebildet werden. Hierbei haben die Löcher üblicherweise einen rechteckigen, insbesondere einen quadratischen Querschnitt. Als Größe der Löcher wird dabei der maximale Abstand zwischen zwei gegenüberliegenden Seiten des Lochs bezeichnet. Bei runden Löchern wird die Größe durch den Durchmesser definiert.

Das Klassieren der Superabsorberpartikel ist notwendig, da bei den üblichen Verfahren zur Herstellung von Superabsorbern Partikel unterschiedlicher Größe hergestellt werden.

Superabsorber sind dabei im Allgemeinen Polyacrylate oder Polymethacrylate, im Folgenden auch Poly(meth)acrylate genannt. Ein übliches Verfahren zur Herstellung von Superabsorbern ist die Umsetzung von Edukten in einem Mischkneter. Hierzu werden die Edukte dem Mischkneter zugegeben und unter Bildung zunächst einer hochviskosen Masse zum Poly(meth)-acrylat umgesetzt. Hierbei umfasst der Mischkneter üblicherweise zwei Wellen mit Knetbarren, die ineinander kämmen. Durch die ineinander kämmenden Knetbarren wird die hochviskose Masse zerrissen. Am Ende des Mischkneters wird das Produkt entnommen und auf einen Bandtrockner aufgegeben, auf dem der Superabsorber getrocknet wird. Nach dem Trocknen erfolgt gegebenenfalls eine Zerkleinerung der Partikel. Alternativ ist es auch möglich, den Superabsorber zum Beispiel in einem Sprühtrockner herzustellen, wobei in diesem Fall die Edukte in einem Sprühtrockner zerstäubt werden und in den so erzeugten Tropfen die Edukte zum Poly(meth)acrylat umgesetzt werden.

Unabhängig vom Verfahren zur Herstellung des Superabsorbers entstehen Partikel in unterschiedlichen Größen. Diese werden in unterschiedliche Größen klassiert. Hierzu wird eine Siebmaschine eingesetzt, die üblicherweise einen Siebaufbau aus einer Auslaufwanne und mindestens einem, üblicherweise mehreren darüber angeordneten Siebdecks umfasst. Üblicherweise eingesetzte Siebmaschinen umfassen dabei zwischen einem und sechs Siebdecks. Die zu klassierenden Superabsorberpartikel werden oben auf den Siebaufbau, das heißt auf das oberste Siebdeck gegeben und durchlaufen den Siebaufbau, wobei die auf dem jeweiligen Siebdeck verbleibende Materialfraktion mit jedem durchlaufenden Siebdeck feiner wird und die gröberen Fraktionen nach und nach abgetrennt werden. Hierzu nimmt die Lochgröße der Siebdecks von oben nach unten entsprechend der gewünschten Durchmesser der Partikel der abzutrennenden Fraktionen ab. Zur Durchführung des Siebens wird der Siebaufbau in taumelnde Bewegungen versetzt. Hierzu wird der Siebaufbau zum Beispiel auf bewegliche Füße oder ein Gestell montiert und mit einem Motor angetrieben. Dabei ist der Siebaufbau mit einem Exzenter verbunden, der über eine Drehachse des Motors angetrieben wird. Durch den Exzenter entsteht ein Versatz zwischen der Drehachse und der Symmetrieachse des Siebaufbaus. Zusätzlich können Gestell oder Füße so ausgeführt sein, dass sich der Siebaufbau in Bezug auf die Drehachse neigen lässt. Durch diesen Aufbau wird der Siebaufbau zu einer taumelnden Bewegung gezwungen, wenn die Drehachse angetrieben wird. Die Bewegung ist periodisch, wobei eine Periodendauer der Zeitspanne einer Umdrehung der Drehachse entspricht. Das zu siebende Material führt dabei eine elliptische Bewegung aus, ausgehend von der Mitte des Siebaufbaus, an der das Material aufgegeben wird. Die Verweilzeit des Materials im Siebaufbau kann dabei durch Verstellen des Exzenters oder des Neigungswinkels des Siebaufbaus eingestellt werden. Zur Entnahme des Materials sind jeweils am Rand jedes Siebdecks Entnahmestutzen angebracht, durch die die jeweilige Fraktion vom Siebdeck entnommen wird.

Erfindungsgemäß befinden sich zwischen den Siebdecks die Lochplatten, auf denen die Bälle positioniert sind. Die Lochplatten können dabei alle Löcher mit dem gleichen Durchmesser aufweisen oder aber auch, wie auch die Siebdecks mit von oben nach unten abnehmendem Durchmesser. Bevorzugt ist jedoch der Einsatz von Lochplatten mit gleichem Durchmesser. Die Größe der Löcher ist dabei so gewählt, dass die gesiebten Superabsorberpartikel leicht durchfallen, die Bälle jedoch nicht. Hierbei ist auch darauf zu achten, dass die Bälle nicht in den Löchern verklemmen können, so dass die Löcher entsprechend klein genug gewählt werden müssen. Bevorzugt ist es dabei, wenn die Löcher in den Lochplatten kleiner sind als der Radius der Bälle. Auf der anderen Seite ist es vorteilhaft, wenn die Löcher mindestens doppelt so groß sind wie die jeweils durch das Siebdeck fallenden Superabsorberpartikel.

Um eine gute Abreinigung der Siebdecks zu erhalten, weisen die Bälle einen Durchmesser im Bereich von 20 bis 60 mm auf.

Um eine ausreichende Abreinigung des oberhalb der Lochplatte liegenden Siebdecks zu erhalten, ist es weiterhin bevorzugt, wenn die Bälle eine Rückprallelastizität im Bereich von 60 bis 85 % aufweisen. Besonders bevorzugt ist eine Rückprallelastizität im Bereich von 60 bis 80 %.

Erfindungsgemäß weisen die Bälle eine Steifigkeit im Bereich von 40 bis 100 N/mm auf. Insbesondere ist es bevorzugt, wenn die Steifigkeit im Bereich von 50 bis 75 N/mm.

Die Dämpfung der Bälle liegt im Bereich von 1 bis 4 %, insbesondere im Bereich von 1,5 bis 4 %.

Durch die entsprechende Rückprallelastizität, Rückprallenergie, Steifigkeit und Dämpfung wird erzielt, dass die Bälle in einer ausreichend großen Frequenz zwischen der Lochplatte und dem darüber liegenden Siebdeck springen und so gegen das Siebdeck schlagen. Des Weiteren wird so eine ausreichende Aufprallenergie auf das Siebdeck erzielt, die ausreichend ist, am Siebdeck anhaftende Superabsorberpartikel und in den Löchern des Siebdecks verklemmte Superabsorberpartikel zu lösen und so das Siebdeck zu reinigen. Hierdurch wird eine deutlich verlängerte Betriebsdauer der Siebmaschine erzielt. Insbesondere ist es nicht notwendig, nach jeweils relativ kurzen Betriebszeiten die Siebmaschine zu Reinigungszwecken abzuschalten. Durch die automatisierte Abreinigung mit Hilfe der Bälle können deutlich verlängerte Standzeiten erzielt werden.

Um eine Schädigung der Bälle durch Abrasion durch die Superabsorberpartikel zu minimieren hat sich gezeigt, dass eine Shore-Härte im Bereich von 60 bis 120 Shore A vorteilhaft ist. Besonders bevorzugt ist eine Shore-Härte im Bereich von 65 bis 100 Shore A.

Weiterhin hat sich gezeigt, dass für eine gute Abreinigung der Siebdecks eine Dichte der Bälle im Bereich von 0,8 bis 1,3 g/cm³ vorteilhaft ist.

Die Dichte der Bälle kann dabei zum Beispiel nach DIN EN ISO 1183-1:2004 und die Shore-Härte nach DIN EN ISO 868:2003 bestimmt werden.

Die Rückprallelastizität wird nach DIN 53512:2000-04 bestimmt, indem eine Probe mit einer Hammerfinne mit einer Geschwindigkeit von 2 m/s und einer Energie von 0,5 J beaufschlagt wird. Die Rückprallelastizität ist der Anteil der elastisch von der Probe zurückgegebenen Energie und wird in % der 0,5 J angegeben.

Zur Bestimmung der Dämpfung und der Steifigkeit werden statische und dynamische Druckversuche herangezogen. Beim statischen Druckversuch werden die Kugeln einzeln mit einer Prüfgeschwindigkeit von 5 mm/min auf 100 N Druckkraft be- und entlastet. Hierbei wird ein Kraft-Weg-Diagramm aufgenommen, wobei sich eine Hystereseschleife ergibt. Die Steigung der Kraft-Weg-Kurve ergibt die Steifigkeit und der Anteil der Fläche innerhalb der Hystereseschleife bezogen auf die Fläche, die aufgespannt wird als Rechteck mit den Kantenlängen der maximalen Kraft und des maximalen Weges, die Dämpfung. Bei einer vollständig elastischen Kugel ergibt sich eine Gerade und bei einer vollständig dämpfenden Kugel das Rechteck, das durch die maximale Kraft und den maximalen Weg als Kanten aufgespannt wird.

Zur Bestimmung der Frequenzabhängigkeit werden die Kugeln wie auch im statischen Druckversuch einzeln zwischen zwei Platten belastet und das Kraft-Weg-Diagramm ausgewertet. Allerdings erfolgt die Belastung der Kugeln in diesem Fall mit einer Frequenz von 1, 2, 4, 6, 8 und 10 Hz mit einer Verformung zwischen -0,5 und -1,5 mm, wobei die negative Verformung bedeutet, dass es sich um eine Druckverformung der Kugeln handelt. Es werden jeweils für jede Frequenz die Kraft-Weg-Diagramme aufgenommen, wobei die mittlere Steifigkeit die Steigung der Kraft-Weg-Kurve ist und die Dämpfung das Verhältnis der Fläche innerhalb der Hystereseschleife bezogen auf die durch maximalen Weg und maximale Kraft definierte Rechteckfläche.

Als Material für die zur Abreinigung eingesetzten Bälle eignen sich insbesondere Elastomere. Hierbei können alle dem Fachmann bekannten Elastomere genutzt werden. Zur Einstellung der Eigenschaften der Bälle werden hierbei üblicherweise Füllstoffe, beispielsweise in Faser- oder in Pulverform zugegeben. Übliche eingesetzte Füllstoffe sind zum Beispiel Kurz- oder Langfasern, beispielsweise Kohlenstofffasern, Glasfasern, Mineralfasern oder Aramidfasern. Übliche eingesetzte pulverförmige Füllstoffe sind zum Beispiel Talkum. Besonders bevorzug ist der Einsatz von pulverförmigen Füllstoffen.

Die Erfindung betrifft weiterhin eine Siebmaschine zur Durchführung des Verfahrens, wobei die Siebmaschine mindestens zwei Siebdecks umfasst und jeweils unterhalb eines Siebdecks Bälle platziert sind.

In einer bevorzugten Ausführungsform ist unter jedem Siebdeck eine Lochplatte positioniert, auf der die Bälle platziert sind.

Um das unterste Siebdeck zu reinigen ist es zum einen möglich, Bälle in die Auslaufwanne einzubringen, so dass diese zwischen der Auslaufwanne und dem untersten Siebdeck hin- und herspringen. Alternativ und bevorzugt ist es jedoch, auch unter dem untersten Siebdeck eine Lochplatte zu positionieren und die Bälle zwischen der untersten Lochplatte und dem untersten Siebdeck zu positionieren, so dass diese zwischen der Lochplatte und dem untersten Siebdeck springen und auf diese Weise das unterste Siebdeck reinigen.

Da nicht verhindert werden kann, dass Material von den Bällen abrasiert wird, werden üblicherweise weiße oder farblose transparent oder opake Bälle eingesetzt, da diese keine sichtbaren Verunreinigungen in dem hergestellten Superabsorbermaterial erzeugen.

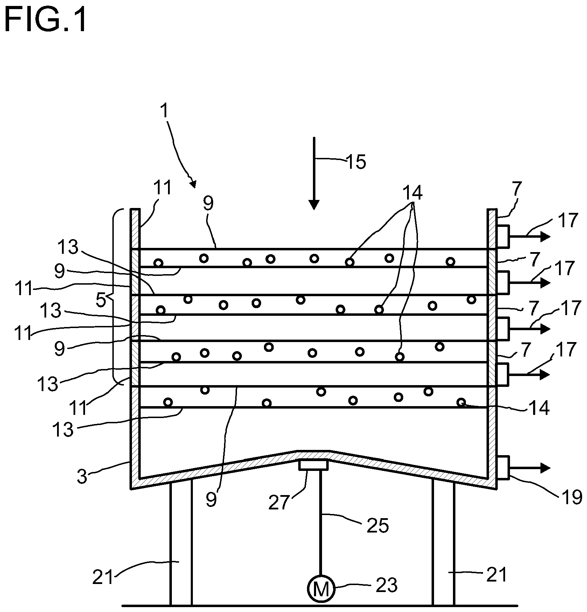

Ein Ausführungsbeispiel der Erfindung ist in der Figur dargestellt und wird in der nachfolgenden Beschreibung näher erläutert.

Die einzige Figur zeigt schematisch eine Siebmaschine mit mehreren Siebdecks und einer Auslaufwanne.

Eine Siebmaschine 1 zur Klassierung von Superabsorberpartikeln umfasst eine Auslaufwanne 3 und einen Siebaufbau 5 mit mindestens einem Siebdeck 7. In der hier dargestellten Ausführungsform umfasst der Siebaufbau 5 vier Siebdecks 7. Je nach Größenklassen und minimalem und maximalem Partikeldurchmesser einer Größenklasse sowie der Partikeldurchmesserverteilung der zu klassierenden Superabsorberpartikel können jedoch auch mehr oder weniger Siebdecks 7 umfasst sein. Üblicherweise umfasst der Siebaufbau 5 ein bis sechs Siebdecks 7. Jedes Siebdeck 7 ist mit einem Sieb 9 ausgerüstet und hat einen nach oben gerichteten umlaufenden Rand 11. Jedes Siebdeck 7 wird dabei konzentrisch auf den nach oben gerichteten umlaufenden Rand 11 des darunterliegenden Siebdecks 7 aufgesetzt. Um zu vermeiden, dass Material von einem Siebdeck 7 aus der Siebmaschine 1 fällt, ist der Durchmesser der einzelnen Siebdecks 7 des Siebaufbaus 5 wie hier dargestellt, vorzugsweise gleich. Alternativ ist es auch möglich, Siebdecks 7 mit unterschiedlichen Durchmessern einzusetzen, wobei in diesem Fall der Durchmesser der einzelnen Siebdecks 7 von unten nach oben abnimmt, so dass jeweils das höhere Siebdeck 7 einen kleineren Durchmesser aufweist als das darunterliegende Siebdeck 7.

Als Material für das Sieb 9 und den umlaufenden Rand 11 jedes Siebdecks 7 wird vorzugsweise Edelstahl verwendet. Alternativ ist es auch möglich, das Sieb 9 aus einem Material zu fertigen, durch das verhindert wird, dass Superabsorberpartikel am Sieb 9 anhaften. Als Material wird hierzu zum Beispiel Polytetrafluorethylen oder ein Perfluoralkoxy-Polymer eingesetzt. Auch die Fertigung des Siebes 9 aus einer Keramik ist möglich. Alternativ ist auch eine Beschichtung des Siebes mit einem Material, durch das verhindert wird, dass Superabsorberpartikel am Sieb 9 anhaften, möglich. Bei einer Beschichtung ist dann darauf zu achten, dass durch die Beschichtung der Durchmesser der Löcher im Sieb 9 nicht zu klein wird.

Zusätzlich zur Fertigung des Siebes 9 aus einem Material, durch das verhindert wird, dass Superabsorberpartikel am Sieb 9 anhaften, oder durch eine Beschichtung des Siebes 9 mit einem entsprechenden Material ist es auch möglich, den umlaufenden Rand 11 des Siebdecks 7 mit einer Beschichtung zu versehen, durch die verhindert wird, dass Superabsorberpartikel anhaften.

Unterhalb des untersten Siebdecks 7 befindet sich eine Auslaufwanne 3. In der Auslaufwanne 3 werden die kleinsten abzutrennenden Partikel aufgefangen. Da die kleinen Superabsorberpartikel, die in der Auslaufwanne 3 aufgefangen werden, dazu neigen, an der Oberfläche der Auslaufwanne 3 anzuhaften, ist es möglich, die Auslaufwanne 3 mit einer Beschichtung zu versehen, durch die das Anhaften der Superabsorberpartikel an der Oberfläche der Auslaufwanne 3 verhindert wird.

Um anhaftende Superabsorberpartikel an den einzelnen Siebdecks zu lösen und Superabsorberpartikel, die in den Löchern der einzelnen Siebe verklemmen zu entfernen, werden erfindungsgemäß jeweils zwischen zwei Siebe Lochplatten 13 positioniert. Auf jede Lochplatte 13 werden Bälle 14 gelegt, die bei Betrieb des Siebes zwischen der Lochplatte 13 und dem Sieb 9 hin- und herspringen und so von unten gegen das Sieb 9 schlagen und dieses hierdurch reinigen. Zur Reinigung des untersten Siebes 9 ist es möglich, Bälle in die Auslaufwanne zu positionieren, die zwischen der Auslaufwanne und dem untersten Sieb hin- und herspringen. Bevorzugt ist es jedoch, auch unterhalb des untersten Siebes 9 eine Lochplatte zu positionieren, auf der die Bälle aufgelegt sind, so dass diese beim Betrieb der Siebmaschine 1 zwischen der untersten Lochplatt 13 und dem untersten Sieb 9 hin- und herspringen.

Um die Superabsorberpartikel in unterschiedliche Größenklassen zu klassieren, werden diese auf das oberste Siebdeck 7 aufgegeben. Dies mit einem Pfeil 15 dargestellt. Vorzugsweise werden die Superabsorberpartikel, wie in der Figur dargestellt, mittig auf das oberste Siebdeck 7 aufgegeben. Es ist allerdings auch möglich, die Superabsorberpartikel außermittig aufzugeben. Selbst eine Aufgabe der Superabsorberpartikel am Rand des Siebdecks 7 ist möglich.

Um einen Trennprozess der Superabsorberpartikel mit der Siebmaschine 1 durchzuführen, wird die Siebmaschine in taumelnde Bewegungen versetzt. Hierdurch werden auch die auf das oberste Siebdeck 7 aufgegebenen Superabsorberpartikel in Bewegung versetzt, so dass diese auf dem Siebdeck 7 beginnen zu rutschen. Aufgrund der Größe der Löcher im Sieb 9 fallen die Superabsorberpartikel, deren Durchmesser kleiner ist als der Durchmesser der Löcher im Sieb 9 durch das Sieb 9 auf das darunterliegende Siebdeck 7. Die Superabsorberpartikel, deren Durchmesser größer ist als der Durchmesser der Löcher des Siebes 9, verbleiben auf dem Siebdeck und werden über eine Entnahmestelle 17 vom Siebdeck 7 entnommen. Dieser Vorgang wird für jedes Siebdeck 7 des Siebaufbaus 5 wiederholt, wobei die Siebdecks 7 unterhalb des obersten Siebdecks 7 jeweils mit den Superabsorberpartikeln beschickt werden, die durch das Sieb 9 des darüber liegenden Siebdecks 7 fallen. Die Superabsorberpartikel, die größer sind als die Löcher in dem jeweiligen Sieb 9, werden über die Entnahmestelle 17 vom Siebdeck 7 entnommen. Eine Klassierung in unterschiedliche Größenklassen wird dabei dadurch erreicht, dass die Größe der Löcher in den Sieben 9 von oben nach unten abnimmt. Die kleinsten Superabsorberpartikel, die durch das Sieb 9 des untersten Siebdecks 7 fallen, werden in der Auslaufwanne 3 aufgefangen und über eine Entnahmestelle 19 aus der Auslaufwanne 3 entnommen. Zur Unterstützung der Bewegung der Superabsorberpartikel in der Auslaufwanne 3 in Richtung der Entnahmestelle 19 ist der Boden der Auslaufwanne 3 vorzugsweise - wie hier dargestellt - konisch geformt. Hierdurch rutschen die Superabsorberpartikel zusätzlich an die tiefste Stelle. Wenn die Entnahmestelle mittig in der Auslaufwanne 3 angeordnet ist, ist die Spitze des Konus nach unten gerichtet, bei einer seitlich angeordneten Entnahmestelle 19, wie sie hier dargestellt ist, zeigt die Spitze es Konus nach oben in Richtung des darüber liegenden Siebdecks 7. Die Spitze kann abgeflacht oder spitz sein. Bevorzugt ist die Spitze abgeflacht, so dass der Konus die Form eines Kegelstumpfes aufweist.

Um sich in den Löchern der Siebe 9 verfangene Superabsorberpartikel zu lösen, sind erfindungsgemäß jeweils unter den Siebdecks, das heißt zwischen den einzelnen Siebdecks 7 Lochplatten 13 positioniert, auf denen Bälle positioniert sind, die durch die Bewegung der Siebmaschine 1 beginnen aufzuspringen und so gegen das jeweils darüber liegende Sieb 9 prallen und die sich verfangenen Superabsorberpartikel aus den Sieben 9 lösen. Entsprechend werden auch, um das unterste Siebdeck zu reinigen, die Bälle entweder in der Auslaufwanne positioniert, damit diese gegen das unterste Siebdeck springen oder es wird unterhalb des untersten Siebdecks 9, wie hier dargestellt, eine weitere Lochplatte positioniert, auf der die Bälle platziert sind, so dass diese bei der Bewegung der Siebmaschine zwischen der untersten Lochplatte 13 und dem untersten Sieb 9 hin- und herspringen und so auch das unterste Sieb 9 reinigen.

In einer bevorzugten Ausführungsform ist die Siebmaschine 1 eine Taumelsiebmaschine. Um die Siebmaschine 1 in taumelnde Bewegungen versetzen zu können, ist die Auslaufwanne 3 mit dem Siebaufbau 5 auf ein Gestell oder auf Füße 21 montiert. Die Füße 21 sind fest mit dem Boden verbunden und haben mindestens ein Gelenk, damit sich die Auslaufwanne 3 und der auf die Auslaufwanne 3 montierte Siebaufbau 5 bewegen können. Bevorzugt haben die Füße jeweils mindestens zwei Gelenke oder einen flexiblen Abschnitt, so dass eine Bewegung in jede Richtung ermöglicht wird. Zur Erzeugung der Bewegung ist es möglich, die Füße 21 zu bewegen. Bevorzugt ist es jedoch, einen zusätzlichen Antrieb 23 vorzusehen. Der Antrieb 23 ist mit einer Drehachse 25 verbunden, die in einem Exzenter 27 endet. Der Exzenter 27 ist in der hier dargestellten Ausführungsform mittig unterhalb der Auslaufwanne 3 so montiert, dass eine Drehbewegung des Exzenters 27 bei angetriebener Drehachse 25 eine typische Rüttelbewegung der Auslaufwanne 3 und des Siebaufbaus 5 in radialer Richtung bewirkt ohne die Auslaufwanne 3 und den Siebaufbau 5 selbst in eine rotierende Bewegung zu versetzen. Zusätzlich ist es möglich, durch eine Kippbewegung der Drehachse 25 oder einer entsprechenden Bewegung der Füße 21 eine Neigung von Auslaufwanne 3 und Siebaufbau 5 zu bewirken. Diese Rüttelbewegung und das Kippen führt dann zu einer für eine Taumelsiebmaschine typischen Taumelbewegung von Auslaufwanne 3 und Siebaufbau 5. Selbstverständlich kann die Siebmaschine 1 auch ohne Kippbewegung betrieben werden.

### Beispiele

Es werden Bälle aus Elastomermaterialien mit unterschiedlichen Eigenschaften untersucht. Die Eigenschaften der verschiedenen Bälle sind in der nachfolgenden Tabelle aufgeführt. Hierbei bezeichnet V ein Vergleichsbeispiel und mit 1 bis 7 sind Beispiele mit erfindungsgemäßen Bällen bezeichnet.

**Tabelle 1: Eigenschaften der Bälle**

| | Durchmesser [mm] | Masse [g] | Dichte [g/cm²] | statische Steifigkeit [N/mm] | dynamische Steifigkeit bei 1 Hz [N/mm] | Dämpfung bei 1 Hz [%] | Härte Shore A | Rückprallelastizität [%] |
|---|---|---|---|---|---|---|---|---|
| V | 34,7 | 32,65 | 1,5 | 35,1 | 30,2 | 4,57 | 60 | 75 |
| 1 | 29,9 | 16,95 | 1,21 | 60,6 | 58,9 | 3,76 | 74 | 64 |
| 2 | 33,9 | 22,08 | 1,08 | 66,5 | 79,9 | 3,83 | 80 | 69 |
| 3 | 35,0 | 23,98 | 1,07 | 67,7 | 77,1 | 1,66 | 78 | 80 |
| 4 | 30,1 | 15,38 | 1,07 | 61,2 | 60,6 | 3,65 | 77 | 72 |
| 5 | 34,0 | 22,28 | 1,08 | 65,1 | 69,7 | 3,55 | 80 | 73 |
| 6 | 29,8 | 14,87 | 1,07 | 60,1 | 59,7 | 2,74 | 77 | 76 |
| 7 | 34,0 | 22,06 | 1,07 | 67,7 | 80,8 | 3,87 | 80 | 72 |

Bei Einsatz in einer Siebmaschine zur Klassierung von Superabsorberpartikeln zeigen die Bälle der Beispiele 1 bis 7 eine längere Standzeit bis zum notwendigen Austausch als die Bälle des Vergleichsbeispiels V.

### Bezugszeichenliste

- 1: Siebmaschine
- 3: Auslaufwanne
- 5: Siebaufbau
- 7: Siebdeck
- 9: Sieb
- 11: umlaufender Rand
- 13: Lochplatte
- 14: Ball
- 15: Aufgabe der Superabsorberpartikel
- 17: Entnahmestelle von Siebdeck 7
- 19: Entnahmestelle aus der Auslaufwanne 3
- 21: Fuß
- 23: Antrieb
- 25: Drehachse
- 27: Exzenter

## Patentansprüche

1. Verfahren zur Klassierung von Superabsorberpartikeln, bei dem die Superabsorberpartikel auf ein oberstes Siebdeck (7) einer mindestens zwei Siebdecks (7) mit unterschiedlicher Lochgröße aufweisenden Siebmaschine gegeben werden, wobei jeweils die Superabsorberpartikel, die kleiner als die Löcher des jeweiligen Siebdecks (7) sind, durch die Löcher fallen und die auf dem Siebdeck (7) verbleibenden Superabsorberpartikel über eine Entnahmestelle (17) entnommen werden, wobei unter jedem Siebdeck (7) Bälle (14) positioniert sind, die durch die Bewegung der Siebmaschine (1) aufspringen und von unten gegen das jeweils darüber liegende Siebdeck (7) schlagen, **dadurch gekennzeichnet, dass** die Bälle (14) einen Durchmesser im Bereich von 20 bis 60 mm, eine dynamische Steifigkeit bei 1 Hz im Bereich von 40 bis 100 N/mm und eine Dämpfung im Bereich von 1 bis 4 % aufweisen, wobei zur Bestimmung der Steifigkeit und der Dämpfung die Bälle einzeln zwischen zwei Platten mit einer Frequenz von 1 Hz mit einer Druckverformung zwischen -0.5 und -1,5 mm belastet werden und ein Kraft-Weg-Diagramm aufgenommen wird, wobei sich eine Hystereseschleife ergibt, und die Steifigkeit die Steigung der Kraft-Weg-Kurve und die Dämpfung das Verhältnis der Fläche innerhalb der Hystereseschleife bezogen auf die durch maximalen Weg und maximale Kraft definierte Rechteckfläche ist.

2. Verfahren gemäß Anspruch 1, **dadurch gekennzeichnet, dass** unterhalb jedes Siebdecks eine Lochplatte (13) positioniert ist und die Bälle (14) auf der Lochplatte aufliegen.

3. Verfahren gemäß einem der Ansprüche 1 oder 2, **dadurch gekennzeichnet, dass** die Bälle (14) eine Rückprallelastizität nach DIN 53512:2000-04 im Bereich von 60 bis 85 % aufweisen.

4. Verfahren gemäß einem der Ansprüche 1 bis 3, **dadurch gekennzeichnet, dass** die Bälle (14) eine Shore-Härte im Bereich von 60 bis 120 Shore A aufweisen.

5. Verfahren gemäß einem der Ansprüche 1 bis 4, **dadurch gekennzeichnet, dass** die Bälle (14) eine Dichte nach DIN EN ISO 1183-1:2004 im Bereich von 0,8 bis 1,3 g/cm³ aufweisen.

6. Verfahren gemäß einem der Ansprüche 1 bis 5, **dadurch gekennzeichnet, dass** die Bälle aus einem Elastomermaterial gefertigt sind, wobei das Elastomermaterial zur Einstellung der Eigenschaften gegebenenfalls Füllstoffe enthält.

7. Siebmaschine zur Durchführung des Verfahrens gemäß einem der Ansprüche 1 bis 6, umfassend mindestens zwei Siebdecks (7) sowie Bälle (14), wobei die Bälle (14) jeweils unterhalb eines Siebdecks (7) platziert sind und die Bälle einen Durchmesser im Bereich von 20 bis 60 mm, eine dynamische Steifigkeit bei 1 Hz im Bereich von 40 bis 100 N/mm und eine Dämpfung im Bereich von 1 bis 4 % aufweisen, wobei zur Bestimmung der Steifigkeit und der Dämpfung die Bälle einzeln zwischen zwei Platten mit einer Frequenz von 1 Hz mit einer Druckverformung zwischen -0.5 und -1,5 mm belastet werden und ein Kraft-Weg-Diagramm aufgenommen wird, wobei sich eine Hystereseschleife ergibt, und die Steifigkeit die Steigung der Kraft-Weg-Kurve und die Dämpfung das Verhältnis der Fläche innerhalb der Hystereseschleife bezogen auf die durch maximalen Weg und maximale Kraft definierte Rechteckfläche ist.

8. Siebmaschine gemäß Anspruch 7, **dadurch gekennzeichnet, dass** unter jedem Siebdeck (7) eine Lochplatte (13) positioniert ist und auf jeder Lochplatte (13) Bälle (14) platziert sind.

## Claims

1. A method for classifying superabsorbent particles, in the course of which the superabsorbent particles are put onto a top sieve deck (7) of a sieving machine comprising at least two sieve decks (7) having different hole sizes, the superabsorbent particles which are smaller than the holes in the respective sieve deck (7) falling through the holes and the superabsorbent particles that remain on the sieve deck (7) being removed via an extraction point (17), balls (14) being positioned below each sieve deck (7) which are propelled upwards by the movement of the sieving machine (1) and from below impact the respective sieve deck (7) lying above, wherein the balls (14) have a diameter in the range from 20 to 60 mm, a dynamic stiffness at 1 Hz in the range from 40 to 100 N/mm, and damping in the range of 1% to 4%, and, to determine the stiffness and damping, the balls being individually subjected to loading by compressive deformation between -0.5 mm and -1.5 mm between two plates with a frequency of 1 Hz, and a force-deformation diagram being recorded, resulting in a hysteresis loop, and the stiffness is the gradient of the force-deformation curve and damping is the ratio of the area inside the hysteresis loop to the rectangular area defined by maximum deformation and maximum force.

2. The method according to claim 1, wherein a perforated plate (13) is positioned below each sieve deck and the balls (14) rest on the perforated plate.

3. The method according to claim 1 or 2, wherein the balls (14) have a rebound elasticity in accordance with DIN 53512:2000-04 in the range from 60% to 85%.

4. The method according to one of claims 1 to 3, wherein the balls (14) have a Shore hardness in the range from 60 to 120 Shore A.

5. The method according to one of claims 1 to 4, wherein the balls (14) have a density in accordance with DIN EN ISO 1183-1:2004 in the range from 0.8 to 1.3 g/cm³.

6. The method according to one of claims 1 to 5, wherein the balls are manufactured from an elastomer material, the elastomer material optionally comprising fillers for setting the properties.

7. A sieving machine for carrying out the method according to one of claims 1 to 6, comprising at least two sieve decks (7) and balls (14), the balls (14) being placed below a sieve deck (7) and the balls having a diameter in the range from 20 to 60 mm, a dynamic stiffness at 1 Hz in the range from 40 to 100 N/mm, and damping in the range of 1% to 4%, and, to determine the stiffness and damping, the balls being individually subjected to loading by compressive deformation between -0.5 mm and -1.5 mm between two plates with a frequency of 1 Hz, and a force-deformation diagram being recorded, resulting in a hysteresis loop, and the stiffness is the gradient of the force-deformation curve and damping is the ratio of the area inside the hysteresis loop to the rectangular area defined by maximum deformation and maximum force.

8. The sieving machine according to claim 7, wherein a perforated plate (13) is positioned below each sieve deck (7) and balls (14) are placed on each perforated plate (13) .

## Revendications

1. Procédé de classification de particules de super-absorbant dans lequel les particules de super-absorbant sont placées sur un plateau de criblage supérieur (7) d'une machine de criblage comportant au moins deux plateaux de criblage (7) ayant des tailles de trous différentes, les particules de super-absorbant, qui sont plus petites que les trous ménagés dans le plateau de criblage respectif (7), tombant à travers les trous et les particules de super-absorbant qui restent sur le plateau de criblage (7) étant retirées par le biais d'un emplacement de retrait (17), des billes (14) étant positionnées sous chaque plateau de criblage (7), lesquelles sautent sous l'effet du mouvement de la machine de criblage (1) et frappent depuis le bas le plateau de criblage (7) sus-jacent, **caractérisé en ce que** les billes (14) ont un diamètre dans la gamme de 20 à 60 mm, une rigidité dynamique à 1 Hz dans la gamme de 40 à 100 N/mm et un amortissement dans la gamme de 1 à 4 %, les billes étant chargées individuellement entre deux plaques à une fréquence de 1 Hz avec une déformation en compression comprise entre -0,5 et - 1,5 mm, et un diagramme force-déplacement étant enregistré, afin de déterminer la rigidité et l'amortissement, une boucle d'hystérésis étant obtenue et la rigidité étant la pente de la courbe force-déplacement et l'amortissement étant le rapport de la surface à l'intérieur de la boucle d'hystérésis à la surface rectangulaire définie par le déplacement maximal et la force maximale.

2. Procédé selon la revendication 1, **caractérisé en ce qu'**une plaque perforée (13) est positionnée sous chaque plateau de criblage et les billes (14) sont situées sur la plaque perforée.

3. Procédé selon l'une des revendications 1 et 2, **caractérisé en ce que** les billes (14) ont une élasticité de rebond selon DIN 53512:2000-04 dans la gamme de 60 à 85 %.

4. Procédé selon l'une des revendications 1 à 3, **caractérisé en ce que** les billes (14) ont une dureté Shore dans la gamme de 60 à 120 Shore A.

5. Procédé selon l'une des revendications 1 à 4, **caractérisé en ce que** les billes (14) ont une densité selon DIN EN ISO 1183-1:2004 dans la gamme de 0,8 à 1,3 g/cm³.

6. Procédé selon l'une des revendications 1 à 5, **caractérisé en ce que** les billes sont en un matériau élastomère, le matériau élastomère contenant éventuellement des charges afin d'ajuster les propriétés.

7. Machine de criblage destinée à mettre en œuvre le procédé selon l'une des revendications 1 à 6, ladite machine comprenant au moins deux plateaux de criblage (7) et des billes (14), les billes (14) étant placées chacune sous un plateau de criblage (7) et les billes ayant un diamètre dans la gamme de 20 à 60 mm, une rigidité dynamique à 1 Hz dans la gamme de 40 à 100 N/mm et un amortissement dans la gamme de 1 à 4 %, les billes étant chargées individuellement entre deux plaques à une fréquence de 1 Hz avec une déformation en compression comprise entre -0,5 et -1,5 mm, et un diagramme force-déplacement étant enregistré, afin de déterminer la rigidité et l'amortissement, une boucle d'hystérésis étant obtenue, et la rigidité étant la pente de la courbe force-déplacement et l'amortissement étant le rapport de la surface à l'intérieur de la boucle d'hystérésis à la surface rectangulaire définie par le déplacement maximal et la force maximale.

8. Machine de criblage selon la revendication 7, **caractérisée en ce qu'**une plaque perforée (13) est positionnée sous chaque plateau de criblage (7) et des billes (14) sont placées sur chaque plaque perforée (13) .
